# EUROPÄISCHE PATENTSCHRIFT

(11) **EP 4 591 696 B1**
(45) Veröffentlichungstag und Bekanntmachung des Hinweises auf die Patenterteilung: **19.08.2026**
(21) Anmeldenummer: 25154035.7
(22) Anmeldetag: 27.01.2025
(51) Int. Cl.: A01D 34/66, A01D 34/73

(54) **MÄHWERK**
MOWING DEVICE
FAUCHEUSE

(30) Priorität: 29.01.2024 DE 102024102486
(43) Veröffentlichungstag der Anmeldung: 30.07.2025
(73) Patentinhaber: CLAAS Saulgau GmbH, 88348 Bad Saulgau (DE)
(72) Erfinder: Speer, Christian, 78267 Aach (DE); Fischer, Josef, 88400 Biberach (DE)

(56) Entgegenhaltungen:
- EP-A2- 3 143 865
- US-A- 4 497 161
- US-A1- 2015 305 236
- US-A1- 2022 022 372
- US-B2- 10 117 379

## Beschreibung

Die Erfindung betrifft ein Mähwerk (siehe US10117379) nach dem Oberbegriff des Anspruchs 1
DE 1 945 760 U offenbart einen Schneidbalken für eine Mähmaschine. Der Schneidbalken verfügt über mehrere in einer Reihe nebeneinander positionierte Mähorgane, wobei die Mähorgane Messerscheiben aufweisen. Die Messerscheiben unmittelbar benachbarter Mähorgane überlappen sich in einer Projektion, wobei die Messerscheiben jeweils unmittelbar benachbarter Mähorgane in unterschiedlichen Ebenen angeordnet sind. So sind in ein Arbeitsposition des Mähwerks erste Messerscheiben erster Mähorgane in einer ersten, unteren Ebene und zweite Messerscheiben zweiter Mähorgane in einer zweiten, oberen Ebene angeordnet. Ferner ist ein Gehäuse mit einem Getriebebalken gezeigt, wobei sich in dem Getriebebalken des Gehäuses Kettenräder erstrecken, die ein Getriebe zum Antreiben der Messerscheiben bilden. In der Arbeitsposition des Mähwerks ist der Getriebebalken unterhalb der Messerscheiben angeordnet.

Im Mäheinsatz kann sich zwischen den Messerscheiben und dem Getriebebalken Mähgut ansammeln und zu Verstopfungen führen.

Es besteht Bedarf an einem Mähwerk, bei welchem die Gefahr, dass sich zwischen den Mähscheiben und dem Getriebebalken geschnittenes Erntegut sammelt, welches zu Verstopfungen führen kann, reduziert ist.

EP 3 942 919 A1 zeigt einen Vorsatz für eine landwirtschaftliche Erntemaschine zum Ernten von Mais oder Getreide. Der Vorsatz weist Schneideinrichtungen sowie im Betrieb umlaufende Mitnehmervorrichtungen auf. Jede Mitnehmervorrichtung weist oberhalb der Schneidvorrichtungen angeordnete Mitnehmerelemente zur Förderung abgeschnittener Nutzpflanzen auf.

EP 3 143 865 B1 offenbart ein weiteres Mähwerk nach dem Stand der Technik, dessen Mähorgane jedoch kein Messerscheiben aufweist, sondern Messerträger mit am Messerträger montierten Messern.

Hiervon ausgehend liegt der vorliegenden Erfindung die Aufgabe zugrunde, ein neuartiges Mähwerk zu schaffen. Diese Aufgabe wird durch ein Mähwerk nach Anspruch 1.

Erfindungsgemäß ist zwischen jeder ersten Messerscheibe und dem Getriebebalken mindestens jeweils ein erstes Räumorgan mit einer ersten Länge und zwischen jeder zweiten Messerscheibe und dem Getriebebalken mindestens jeweils ein zweites Räumorgan mit einer von der ersten Länge abweichenden zweiten Länge angeordnet ist. Mit dem erfindungsgemäßen Mähwerk kann die Gefahr, dass sich zwischen dem Getriebebalken und den Messerscheiben ungewollt geschnittenes Mähgut bzw. Erntegut ansammelt, reduziert werden. So kann auch die Gefahr von Verstopfungen am Mähwerk reduziert werden. Es wird ein sauberer, zuverlässiger Gutfluss ermöglicht.

Vorzugsweise ist die erste Länge der ersten Räumorgane größer ist als die zweite Länge der zweiten Räumorgane. Hiermit kann die Gefahr, dass sich zwischen den Messerscheiben und dem Getriebebalken Mähgut bzw. Erntegut ansammelt, vorteilhaft reduziert werden.

Vorzugsweise liegen Schneidspitzen einer jeden ersten Messerscheibe auf einer jeweiligen ersten Kreisbahn und Schneidspitzen einer jeden zweiten Messerscheibe auf einer jeweiligen zweiten Kreisbahn, wobei sich die ersten Kreisbahn und die zweite Kreisbahn unmittelbar benachbarter Mähorgane in der Projektion überlappen, wobei sich ein Ende des jeweiligen ersten Räumorgans bis an die jeweilige erste Kreisbahn erstreckt, und wobei ein Ende des jeweiligen zweiten Räumorgans mit radialen Abstand von der jeweiligen zweiten Kreisbahn endet. Die Gefahr, dass sich zwischen dem Getriebebalken und den Messerscheiben ungewollt geschnittenes Mähgut bzw. Erntegut ansammelt, kann vorteilhaft reduziert werden.

Nach einer ersten Alternative ist die zweite Länge der jeweiligen zweiten Räumorgans so bemessen ist, dass das Ende des jeweiligen zweiten Räumorgans mit Abstand zu der jeweiligen ersten Kreisbahn einer jeweiligen unmittelbar benachbarten ersten Messerscheibe endet.

Nach einer zweiten Alternative ist die zweite Länge der jeweiligen zweiten Räumorgans so bemessen, dass das sich Ende des jeweiligen zweiten Räumorgans über die jeweilige erste Kreisbahn einer jeweiligen unmittelbar benachbarten ersten Messerscheibe hinaus erstreckt.

In der ersten Alternative können, in der zweiten Alternative müssen, die ersten Räumorgane und die zweiten Räumorgane zur Bereitstellung eines Phasenversatzes um vorzugsweise 30° bis 90° zueinander versetzt sein Mit beiden Alternativen kann die Gefahr, dass sich geschnittenes Erntegut bzw. Mähgut zwischen dem Getriebebalken und den Messerscheiben ansammelt, reduziert werden.

Vorzugsweise weisen die ersten Räumorgane eine erste Dicke und die zweiten Räumorgane eine zweite Dicke auf, wobei die zweite Dicke größer als die erste Dicke ist. Auch dies dient der weiteren Reduzierung der Gefahr, dass sich zwischen dem Getriebebalken und den Messerscheiben Erntegut bzw. Mähgut ansammelt.

Vorzugsweise weist jedes Mähorgan zusätzlich zu der jeweiligen Messerscheibe einen Messerflansch auf, an welchem sich die jeweilige Messerscheibe abstützt, wobei das jeweilige Räumorgan zumindest an dem jeweiligen Messerflansch befestigt ist. Das jeweilige Räumorgan kann zusätzlich an der jeweiligen an dem jeweiligen Messerscheibe befestigt sein. Vorzugsweise sind die ersten Räumorgane mit der größeren Länge zusätzlich an den Messerscheiben befestigt. Hierdurch wird eine Beschädigungsgefahr für die jeweiligen Räumorgane im Mähbetrieb reduziert.

Vorzugsweise weist das jeweilige erste Räumorgan und/oder das jeweilige zweite Räumorgan an seiner dem Getriebebalken zugewandten Seite eine an den Getriebebalken angepasste, abgestufte oder gebogene oder gekrümmte Kontur auf. Hierdurch ist es möglich, den Bereich zwischen dem Getriebebalken und den Messerscheiben über die Räumorgane optimal von geschnittenem Mähgut bzw. Erntegut zu befreien und so die Gefahr zu reduzieren, dass sich zwischen den Mähbalken und den Messerscheiben Erntegut ansammelt und so zu Verstopfungen führt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1a: eine Vorderansicht eines erfindungsgemäßen Mähwerks;
- Fig. 1b: ein Detail der Fig. 1a;
- Fig. 2a: eine Ansicht von unten auf das Mähwerk der Fig. 1 ohne Getriebebalken, nämlich auf erste und zweite Mähorgane und erste und zweite Räumorgane,
- Fig. 2b: ein Detail der Fig. 2a;
- Fig. 3a: eine perspektivische Ansicht von unten ein alternatives erstes Mähorgan und alternative erste Räumorgane,
- Fig. 3b: ein Detail der Fig. 3a,
- Fig. 4a: eine perspektivische Ansicht von unten ein weiteres alternatives erstes Mähorgan und alternative erste Räumorgane,
- Fig. 4b: ein Detail der Fig. 4a,
- Fig. 5: eine ausschnittsweise Ansicht von unten auf ein alternatives Mähwerk, nämlich auf erste und zweite Mähorgane und erste und zweite Räumorgane,
- Fig. 6: ein Detail der Fig. 5 in Seitenansicht.

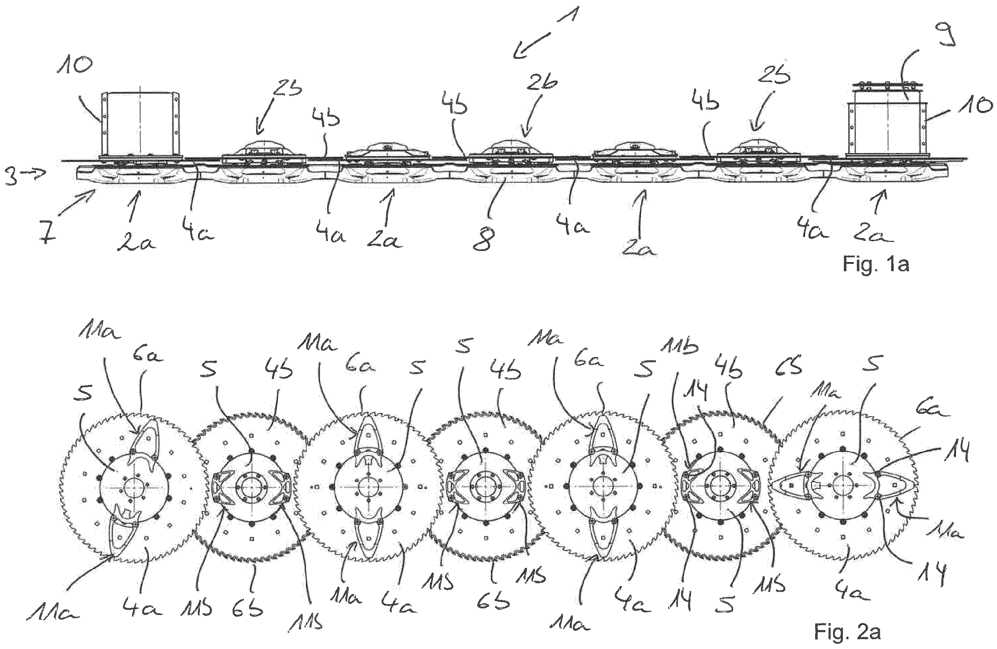

Fig. 1a zeigt eine Vorderansicht eines Mähwerks 1 einer landwirtschaftlichen Erntemaschine. Das Mähwerk 1 verfügt über mehrere Mähorgane 2a, 2b, die unter Ausbildung eines Mähbalkens 3 in einer Reihe nebeneinander positioniert sind.

Jedes Mähorgan 2a, 2b weist eine Messerscheibe 4a, 4b auf. Fig. 2a zeigt eine Ansicht von unten auf die Messerscheiben 4a, 4b der Mähorgane 2a, 2b.

Die Messerscheiben 4a, 4b unmittelbar benachbarter Mähorgane 2a, 2b sind jeweils wechselweise in unterschiedlichen Ebenen angeordnet. So sind in der Arbeitsposition des Mähwerks 1 erste Messerscheiben 4a erster Mähorgane 2a in einer ersten, unteren Ebene und zweite Messerscheiben 4b zweiter Mähorgane 2b in einer zweiten, oberen Ebene angeordnet.

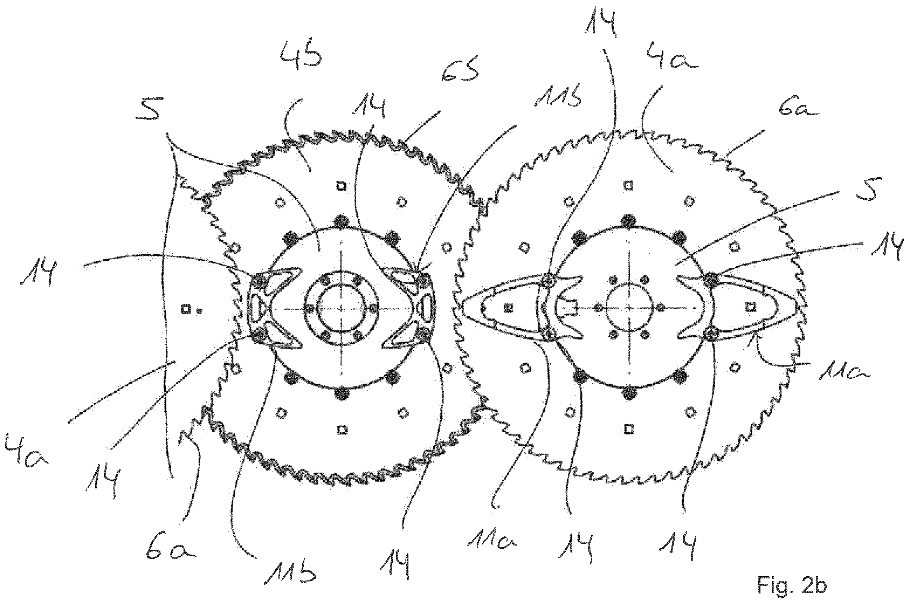

Die Messerscheiben 4a, 4b jeweils unmittelbarer Mähorgane 2a, 2b überlappen sich, und zwar in einer Projektion von oben oder von unten gesehen. Diese Überlappung der Messerscheiben 4a, 4b unmittelbar benachbarter Mähorgane 2a, 2b kann insbesondere Fig. 2a, 2b entnommen werden.

Jede Messerscheibe 4a, 4b eines jeden Mähorgans 2a, 2b stützt sich an einem sogenannten Messerflansch 5 des jeweiligen Mähwerks 2a, 2b ab.

Wie Fig. 2a, 2b entnommen werden kann, verfügen die Messerscheiben 2a, 2b über eine kreisförmige Außenkontur, wobei Schneidspitzen 6a, 6b einer jeden Messerscheibe 4a, 4b auf einer jeweiligen Kreisbahn liegen. So liegen die Schneidspitzen 6a einer jeden ersten Messerscheibe 4a auf einer ersten Kreisbahn in der ersten, unteren Ebene und die Schneidspitzen 6b der zweiten Messerscheiben 4b auf einer zweiten Kreisbahn der zweiten, oberen Ebene.

Die erste Kreisbahn und die zweite Kreisbahn unmittelbar benachbarter Mähorgane 2a, 2b und damit unmittelbar benachbarter Messerscheiben 4a, 4b überlappen sich in der Projektion gesehen, und zwar in einer Blickrichtung von oben oder von unten. Bedingt dadurch, dass die Messerscheiben 4a, 4b unmittelbar benachbarter Mähorgane 2a, 2b jedoch in unterschiedlichen Ebenen mit Abstand voneinander angeordnet sind, können sich die Messerscheiben 4a, 4b frei drehen.

Das Mähwerk 1 verfügt weiterhin über ein Gehäuse 7, welches einen sogenannten Getriebebalken 8 aufweist. In der Arbeitsposition des Mähwerks 1 ist der Getriebebalken 8 unterhalb der Mähorgane 2a, 2b und damit unterhalb der Messerscheiben 4a, 4b derselben angeordnet. Im Getriebebalken 8 ist zumindest teilweise ein Getriebe angeordnet, welches dem Antreiben der Messerscheiben 4a, 4b, ausgehend von einem Antrieb 9 des Mähwerks 1 dient.

Der Antrieb 9 ist dabei gemäß Fig. 1a zusammen mit einem Umlenkorgan 10 an einer ersten Seite des Mähwerks 1 bzw. des Mähbalkens 3 angeordnet. An der gegenüberliegenden Seite des Mähwerks 1 bzw. Mähbalkens 3 ist lediglich das Umlenkorgan 10 vorhanden.

Wie oben ausgeführt, ist demnach in der Arbeitsposition des Mähwerks 1 der Getriebebalken 8 unterhalb der Mähorgane 2a, 2b und demnach unterhalb der Messerscheiben 4a, 4b angeordnet. In der Arbeitsposition des Mähwerks befinden sich die ersten Messerscheiben 4a der ersten Mähorgane 2a in einer ersten, unteren Ebene und die zweiten Messerscheiben 4b der zweiten Mähorgane 2b in einer zweiten, oberen Ebene jeweils oberhalb des Getriebebalken 8. Der Getriebebalken 8 ist also unterhalb dieser beiden Ebenen der ersten und zweiten Messerscheiben 4a, 4b angeordnet.

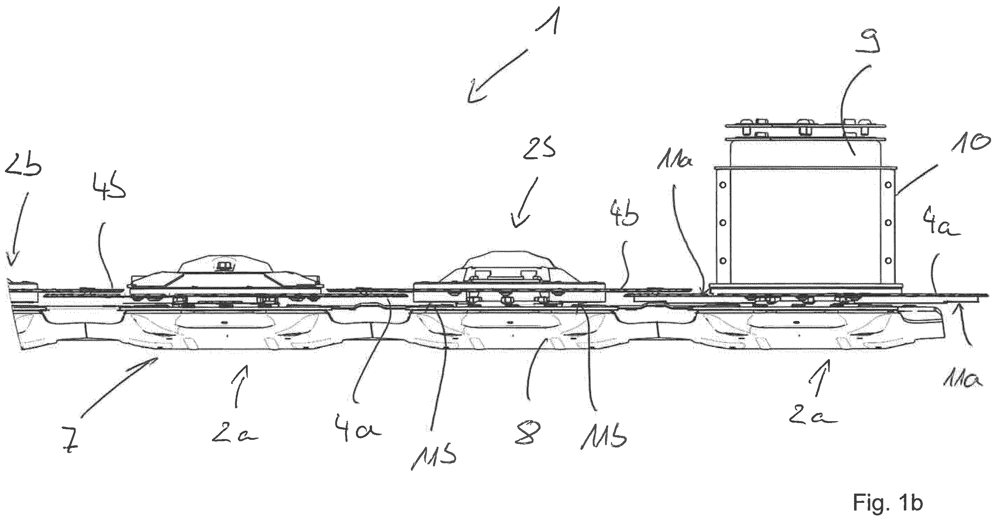

Zwischen jeder ersten Messerscheibe 4a eines jeweiligen ersten Mähorgans 2a und dem Getriebebalken 8 ist mindestens ein jeweiliges erstes Räumorgan 11a angeordnet. Im Ausführungsbeispiel der Fig. 1a, 1b, 2a, 2b sind zwischen jeder ersten Messerscheibe 4a und dem Getriebebalken 8 jeweils zwei erste Räumorgane 11a angeordnet. Das jeweilige erste Räumorgan 11a verfügt dabei über eine erste Länge. Die erste Länge erstreckt sich in Radialrichtung der jeweiligen ersten Messerscheibe 4a.

Zwischen jeder zweiten Messerscheibe 2b des jeweiligen zweiten Mähorgans 2b und dem Getriebebalken 8 ist jeweils ein zweites Räumorgan 11b angeordnet. Im Ausführungsbeispiel der Fig. 1a, 1b, 2a, 2b sind zwischen der zweiten Messerscheibe 4b eines jeweiligen zweiten Mähorgans 2b und dem Mähbalken 8 jeweils zwei zweite Räumorgane 11b angeordnet. Das jeweilige zweite Räumorgan 11b weist dabei eine von der ersten Länge der ersten Räumorgane 11a abweichende zweite Länge auf. Die zweite Länge erstreckt sich in Radialrichtung der jeweiligen zweiten Messerscheibe 4b.

Gemäß Fig. 2a, 2b sind dabei die ersten Längen der ersten Räumorgane 11a größer als die zweiten Längen der zweiten Räumorgane 11b. Diese Längen definieren die Erstreckung der Räumorgane 11a, 11b in radialer Richtung der Mähorgane 2a, 2b bzw. in radialer Richtung der Messerscheiben 4a, 4b.

Dann, wenn wie im Ausführungsbeispiel gezeigt, jeweils zwei Räumorgane 11a, 11b zwischen der jeweiligen Messerscheibe 4a, 4b und dem Mähbalken 8 angeordnet sind, liegen sich diese Räumorgane 11a bzw. 11b diametral gegenüber. So wird eine Unwucht vermieden. Sollte lediglich ein Räumorgan zwischen der jeweiligen Messerscheibe 4a, 4b und dem jeweiligen Mähbalken 8 vorhanden sein, so ist zur Vermeidung einer Unwucht vorzugsweise ein Gegengewicht zum jeweiligen Räumorgan 11a, 11b an der jeweiligen Messerscheibe 4a, 4b verbaut.

Im Ausführungsbeispiel der Fig. 2a, 2b erstreckt sich ein Ende des jeweiligen ersten Räumorgans 11a bis an die jeweilige erste Kreisbahn heran, auf welcher die Schneidspitzen 6a der jeweiligen ersten Messerscheibe 4a liegen. Die radial äußeren Enden des jeweiligen zweiten Räumorgans 11b enden mit radialem Abstand von der jeweiligen zweiten Kreisbahn, auf welcher die Schneidspitzen 6b der jeweiligen zweiten Messerscheibe 4b positioniert sind.

Im Ausführungsbeispiel der Fig. 2a, 2b ist die Länge des jeweiligen zweiten Räumorgans 11b so bemessen, dass das Ende des jeweiligen zweiten Räumorgans 11b mit Abstand zu der jeweiligen ersten Kreisbahn einer jeweiligen unmittelbar benachbarten ersten Messerscheibe 4a endet, auf welcher die Schneidspitzen 6a der jeweiligen unmittelbar benachbarten ersten Messerscheibe 4a angeordnet sind.

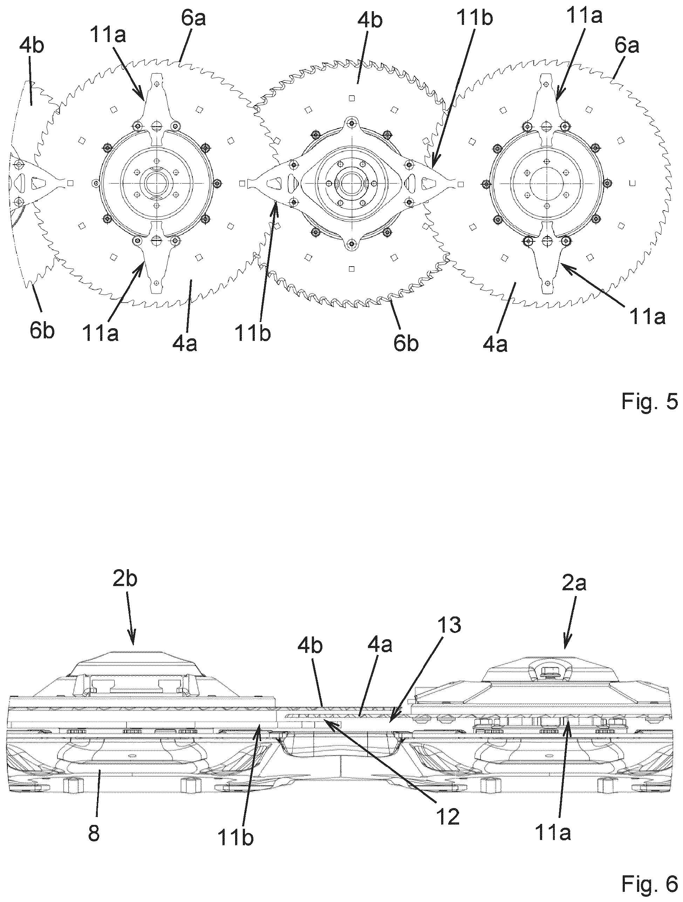

Demgegenüber zeigen Fig. 5, 6 eine alternative Ausführung eines Mähwerks 1, in welcher die zweite Länge des jeweiligen zweiten Räumorgans 11b so bemessen ist, dass sich das Ende des jeweiligen zweiten Räumorgans 11b über die jeweilige erste Kreisbahn einer jeweiligen unmittelbar benachbarten ersten Messerscheibe 4a eines unmittelbar benachbarten Mähorgans 2a hinaus erstreckt, in welcher also die radiale Erstreckung eines jeweiligen zweiten Räumorgans 11b die erste Kreisbahn einer jeweiligen unmittelbar benachbarten ersten Messerscheibe 4a schneidet. Hierbei ist dann vorgesehen, dass die ersten Räumorgane 11a und die zweiten Räumorgane 11b der unmittelbar benachbarten Messerscheiben 4a, 4b in Umfangsrichtung gesehen zueinander versetzt sind, um einen Phasenversatz zwischen den ersten und zweiten Räumorgangen 11a, 11b derart bereitzustellen, dass dieselben sich bei einer Drehung im Betrieb nicht berühren können.

Insbesondere sind die ersten Räumorgane 11a und die zweiten Räumorgane 11b der unmittelbar benachbarten Messerscheiben 4a, 4b in Umfangsrichtung gesehen um einen Winkel von 30° bis 90° zueinander versetzt.

Gemäß Fig. 6 verfügt das jeweilige zweite Räumorgan 11a über eine Ausnehmung 12, in die sich die unmittelbar benachbarte Messerscheibe 4a eines unmittelbar benachbarten Mähorgans 2a hinein erstreckt. Das jeweilige zweite Räumorgan 11a verfügt demnach über einen ersten, oberen Abschnitt, der einen radialen Abstand zur unmittelbar benachbarten Messerscheibe 4a des unmittelbar benachbarten ersten Mähorgans 2a aufweist, sowie einen zweiten, darunterliegenden Abschnitt, der sich in der Projektion mit der unmittelbar benachbarten Messerscheibe 4a des unmittelbar benachbarten Mähorgans 2a überlappt und in einen Freiraum 13 zwischen der Messerscheibe 4a des unmittelbar benachbarten Mähorgans 2a und im Getriebebalken 8 hineinragt.

Die ersten Räumorgane 11a weisen eine erste Dicke und die zweiten Räumorgane 11b eine zweite Dicke auf, wobei die zweite Dicke größer als die erste Dicke ist. Die Dicke der Räumorgane hängt insbesondere vom Abstand der jeweiligen Messerscheiben 4a, 4b des jeweiligen Mähorgans 2a, 2b vom Getriebebalken 8 ab. Wirkt mit einer Messerscheiben 4a, 4b mehr als ein Räumorgan 11a, 11b zusammen, so können die jeweiligen Räumorgan 11a, 11b unterschiedliche Dicken aufweisen.

Die jeweiligen Räumorgane 11a, 11b sind im Bereich des jeweiligen Mähorgans 2a, 2b zumindest am jeweiligen Messerflansch 5 befestigt, insbesondere durch Verschrauben. So kann insbesondere Fig. 2b entnommen werden, dass jedes der Räumorgane 11a, 11b über Schrauben 14 am jeweiligen Messerflansch 5 des jeweiligen Mähorgans 2a, 2b befestigt ist, an welchem sich die jeweilige Messerscheibe 4a, 4b des jeweiligen Mähorgans 2a, 2b abstützt.

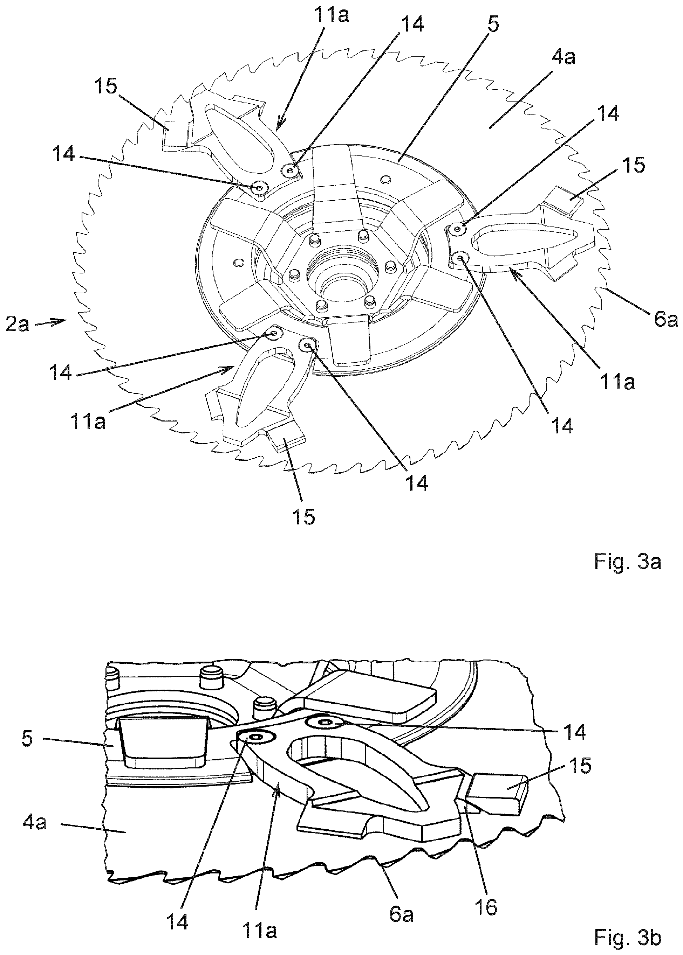

Fig. 3a, 3b zeigen eine alternative Ausführung eines ersten Mähorgans 2a mit einer ersten Messerscheibe 4a und drei ersten Räumorganen 11a. Die drei Räumorgane 11a sind dabei über den Umgang der Messerscheibe 4a gleich verteilt, wobei die Räumorgane 11a wiederum über Schrauben 14 am jeweiligen Messerflansch 5 befestigt sind.

In Fig. 3a, 3b sind die dort gezeigten ersten Räumorgane 11a ferner an der Messerscheibe 4a befestigt, und zwar dadurch, dass ein Vorsprung 16 eines jeweiligen ersten Räumorgans 11a einen Vorsprung 15 an der jeweiligen ersten Messerscheibe 4a des jeweiligen ersten Mähorgans 2a untergreift, sodass hier das erste Räumorgan 11a formschlüssig an der Messerscheibe 4a befestigt ist. Gemäß Fig. 3a ist jedes der dort gezeigten ersten Räumorgane 11a einerseits über die Schrauben 4a am Messerflansch 5 befestigt, ferner besteht ein Formschluss zwischen einem Vorsprung 16 jedes ersten Räumorgans 11a und einem entsprechenden Vorsprung 15 der Messerscheibe 4a.

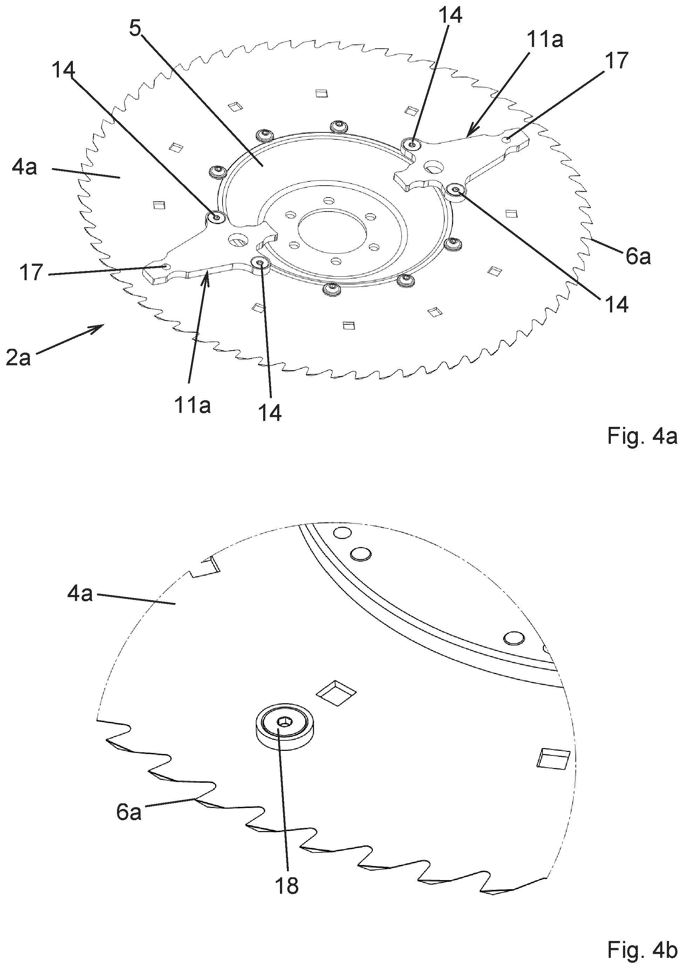

Fig. 4a, 4b zeigen weitere Alternativen des ersten Mähorgans 2a mit einer ersten Messerscheibe 4a und in diesem Fall zwei ersten Räumorganen 11a, die sich wiederum diametral gegenüberliegen und über Schrauben 14 am Messerflansch 5 der Schrauben 14 befestigt sind. In Fig. 4a, 4b sind die ersten Räumorgane 11a über weitere Schrauben 17 mit der ersten Messerscheibe 4a befestigt, die hierzu einen entsprechenden Anschraubpunkt 18 bereithält.

Die Räumorgane 11a, 11b weisen an ihrer dem Getriebebalken 8 zugewandten Seite einen an den Getriebebalken 8 angepasste Kontur auf. Diese Kontur kann abgestuft, gewölbt oder gekrümmt sein, um den freizuräumenden Bereich zwischen der jeweiligen Messerscheibe 4a, 4b und dem Getriebebalken 8 optimal abzudecken. Diese Kontur kann abgestuft, gewölbt oder gebogen sein, und zwar abhängig von der entsprechenden Konturierung des Getriebebalkens 8 an seiner den Messerscheiben 4a, 4b zugewandten Seite.

### Bezugszeichenliste

- 1: Mähwerk
- 2a: Mähorgan
- 2b: Mähorgan
- 3: Mähbalken
- 4a: Messerscheibe
- 4b: Messerscheibe
- 5: Messerflansch
- 6a: Schneidspitze
- 6b: Schneidspitzen
- 7: Gehäuse
- 8: Getriebebalken
- 9: Antrieb
- 10: Umlenkorgan
- 11a: Räumorgan
- 11b: Räumorgan
- 12: Ausnehmung
- 13: Freiraum
- 14: Schraube
- 15: Vorsprung
- 16: Vorsprung
- 17: Schraube
- 18: Anschraubpunkt

## Patentansprüche

1. Mähwerk (1) einer landwirtschaftlichen Erntemaschine,
mit mehreren Mähorganen (2a, 2b), die unter Ausbildung eines Mähbalkens (3) in einer Reihe nebeneinander positioniert sind,
wobei jedes Mähorgan (2a, 2b) eine Messerscheibe (4a, 4b) aufweist,
wobei die Messerscheiben (4a, 4b) jeweils unmittelbar benachbarter Mähorgane (2a, 2b) wechselweise in unterschiedlichen Ebenen angeordnet sind, nämlich in Arbeitsposition des Mähwerks (1) erste Messerscheiben (4a) erster Mähorgane (2a) in einer ersten, unteren Ebene und zweite Messerscheiben (4b) zweiter Mähorgane (2b) in einer zweiten, oberen Ebene,
wobei sich die Messerscheiben (4a, 4b) jeweils unmittelbar benachbarter Mähorgane (2a, 2b) in einer Projektion überlappen,
mit einem einen Getriebebalken (8) aufweisenden Gehäuse (7),
wobei in dem Getriebebalken (8) ein Getriebe, welches dem Antreiben der Messerscheiben (4a, 4b) dient, zumindest teilweise angeordnet ist,
wobei der Getriebebalken (8) in Arbeitsposition des Mähwerks unterhalb der Messerscheiben (4a, 4b) angeordnet ist,
**dadurch gekennzeichnet, dass**
zwischen jeder ersten Messerscheibe (4a) und dem Getriebebalken (8a) mindestens jeweils ein erstes Räumorgan (11a) mit einer ersten Länge und zwischen jeder zweiten Messerscheibe (4b) und dem Getriebebalken (8) mindestens jeweils ein zweites Räumorgan (11b) mit einer von der ersten Länge abweichenden zweiten Länge angeordnet ist.

2. Mähwerk nach Anspruch 1, **dadurch gekennzeichnet, dass**
die erste Länge der ersten Räumorgane (11a) größer ist als die zweite Länge der zweiten Räumorgane (11b).

3. Mähwerk nach Anspruch 1 oder 2, **dadurch gekennzeichnet, dass**
Schneidspitzen (6a) einer jeden ersten Messerscheibe (4a) auf einer jeweiligen ersten Kreisbahn liegen,
Schneidspitzen (4b) einer jeden zweiten Messerscheibe (4b) auf einer jeweiligen zweiten Kreisbahn liegen,
sich die erste Kreisbahn und die zweite Kreisbahn unmittelbar benachbarter Mähorgane (2a, 2b) in der Projektion überlappen,
sich ein Ende des jeweiligen ersten Räumorgans (11a) bis an die jeweilige erste Kreisbahn erstreckt,
ein Ende des jeweiligen zweiten Räumorgans (11b) mit radialem Abstand von der jeweiligen zweiten Kreisbahn endet.

4. Mähwerk nach Anspruch 3, **dadurch gekennzeichnet, dass**
die zweite Länge der jeweiligen zweiten Räumorgans (11b) so bemessen ist, dass das Ende des jeweiligen zweiten Räumorgans (11b) mit Abstand zu der jeweiligen ersten Kreisbahn einer jeweiligen unmittelbar benachbarten ersten Messerscheibe (4a) endet.

5. Mähwerk nach Anspruch 3, **dadurch gekennzeichnet, dass**
die zweite Länge der jeweiligen zweiten Räumorgans (11b) so bemessen ist, dass sich das Ende des jeweiligen zweiten Räumorgans (11b) über die jeweilige erste Kreisbahn einer jeweiligen unmittelbar benachbarten ersten Messerscheibe (4a) hinaus erstreckt.

6. Mähwerk nach einem der Ansprüche 1 bis 5, **dadurch gekennzeichnet, dass**
die ersten Räumorgane (11a) und die zweiten Räumorgane (11b) zur Bereitstellung eines Phasenversatzes zwischen den ersten Räumorganen (11a) und den zweiten Räumorganen (11b) um vorzugsweise 30° bis 90° zueinander versetzt sind.

7. Mähwerk nach einem der Ansprüche 1 bis 6, **dadurch gekennzeichnet, dass**
die ersten Räumorgane (11a) eine erste Dicke und die zweiten Räumorgane (11b) eine zweite Dicke aufweisen, wobei die zweite Dicke größer als die erste Dicke ist.

8. Mähwerk nach einem der Ansprüche 1 bis 7, **dadurch gekennzeichnet, dass**
jedes Mähorgan (2a, 2b) zusätzlich zu der jeweiligen Messerscheibe (4a, 4b) einen Messerflansch (5) aufweist, an welchem sich die jeweilige Messerscheibe (4a, 4b) abstützt,
das jeweilige Räumorgan (11a, 11b) zumindest an dem jeweiligen Messerflansch (5) befestigt ist.

9. Mähwerk nach Anspruch 8, **dadurch gekennzeichnet, dass**
das jeweilige Räumorgan (11a, 11b) zusätzlich an dem jeweiligen Messerscheibe (4a, 4b) befestigt ist.

10. Mähwerk nach einem der Ansprüche 1 bis 9, **dadurch gekennzeichnet, dass**
das jeweilige erste Räumorgan (11a) und/oder das jeweilige zweite Räumorgan (11b) an seiner dem Getriebebalken (8) zugewandten Seite eine an den Getriebebalken (8) angepasste, abgestufte oder gebogene oder gekrümmte Kontur aufweist.

## Claims

1. Mower (1) of an agricultural harvester,
comprising a plurality of mowing members (2a, 2b), which are positioned next to one another in a row to form a cutter bar (3),
wherein each mowing member (2a, 2b) has a cutter disc (4a, 4b),
wherein the cutter discs (4a, 4b) of directly adjacent mowing members (2a, 2b) are arranged alternately in different planes, namely, in the working position of the mower (1), first cutter discs (4a) of first mowing members (2a) are arranged in a first, lower plane and second cutter discs (4b) of second mowing members (2b) are arranged in a second, upper plane,
wherein the cutter discs (4a, 4b) of directly adjacent mowing members (2a, 2b) overlap in one projection,
comprising a housing (7) having a transmission bar (8),
wherein a transmission, which serves to drive the cutter discs (4a, 4b), is at least partially arranged in the transmission bar (8),
wherein the transmission bar (8) is arranged below the cutter discs (4a, 4b) in the working position of the mower,
**characterized in that**
at least one first clearing member (lla) with a first length is arranged between each first cutter disc (4a) and the transmission bar (8a) and at least one second clearing member (11b) with a second length differing from the first length is arranged between each second cutter disc (4b) and the transmission bar (8).

2. Mower according to Claim 1, **characterized in that**
the first length of the first clearing members (11a) is greater than the second length of the second clearing members (11b).

3. Mower according to Claim 1 or 2, **characterized in that**
cutting tips (6a) of each first cutter disc (4a) lie on a respective first circular path,
cutting tips (4b) of each second cutter disc (4b) lie on a respective second circular path,
the first circular path and the second circular path of directly adjacent mowing members (2a, 2b) overlap in the projection,
one end of the respective first clearing member (lla) extends to the respective first circular path,
one end of the respective second clearing member (11b) ends at a radial distance from the respective second circular path.

4. Mower according to Claim 3, **characterized in that**
the second length of the respective second clearing member (11b) is dimensioned such that the end of the respective second clearing member (11b) ends at a distance from the respective first circular path of a respective directly adjacent first cutter disc (4a).

5. Mower according to Claim 3, **characterized in that**
the second length of the respective second clearing member (11b) is dimensioned such that the end of the respective second clearing member (11b) extends beyond the respective first circular path of a respective directly adjacent first cutter disc (4a).

6. Mower according to one of Claims 1 to 5, **characterized in that**
the first clearing members (11a) and the second clearing members (11b) are offset from one another by preferably 30° to 90° to provide a phase offset between the first clearing members (11a) and the second clearing members (11b) .

7. Mower according to one of Claims 1 to 6, **characterized in that**
the first clearing members (11a) have a first thickness and the second clearing members (11b) have a second thickness, wherein the second thickness is greater than the first thickness.

8. Mower according to one of Claims 1 to 7, **characterized in that**
each mowing member (2a, 2b) has a cutter flange (5) in addition to the respective cutter disc (4a, 4b), on which the respective cutter disc (4a, 4b) is supported,
the respective clearing member (11a, 11b) is attached at least to the respective cutter flange (5).

9. Mower according to Claim 8, **characterized in that**
the respective clearing member (11a, 11b) is additionally attached to the respective cutter disc (4a, 4b).

10. Mower according to one of Claims 1 to 9, **characterized in that**
the respective first clearing member (11a) and/or the respective second clearing member (11b) has a stepped or curved or bent contour adapted to the transmission bar (8) on its side facing the transmission bar (8).

## Revendications

1. Mécanisme de fauchage (1) d'une moissonneuse agricole,
avec plusieurs organes de fauchage (2a, 2b), qui sont positionnés côte à côte en une rangée de manière à former une barre de fauchage (3),
chaque organe de fauchage (2a, 2b) comportant un disque de coupe (4a, 4b),
les disques de coupe (4a, 4b) d'organes de fauchage (2a, 2b) respectivement directement adjacents étant disposés alternativement dans des plans différents, à savoir dans la position de travail du mécanisme de fauchage (1), des premiers disques de coupe (4a) de premiers organes de fauchage (2a) dans un premier plan inférieur et des deuxièmes disques de coupe (4b) de deuxièmes organes de fauchage (2b) dans un deuxième plan supérieur,
les disques de coupe (4a, 4b) chevauchant des organes de fauchage (2a, 2b) respectivement directement adjacents dans une projection,
avec un boîtier (7) comportant une barre de transmission (8),
une transmission, qui sert à entraîner les disques de coupe (4a, 4b), étant disposée au moins en partie dans la barre de transmission (8),
la barre de transmission (8) étant disposée sous les disques de coupe (4a, 4b) dans la position de travail du mécanisme de fauchage,
**caractérisé en ce que**
au moins respectivement un premier organe de déblaiement (11a) avec une première longueur est disposé entre chaque premier disque de coupe (4a) et la barre de transmission (8a) et au moins respectivement un deuxième organe de déblaiement (11b) avec une deuxième longueur différente de la première longueur est disposé entre chaque deuxième disque de coupe (4b) et la barre de transmission (8).

2. Mécanisme de fauchage selon la revendication 1, **caractérisé en ce que**
la première longueur des premiers organes de déblaiement (11a) est supérieure à la deuxième longueur des deuxièmes organes de déblaiement (11b).

3. Mécanisme de fauchage selon la revendication 1 ou 2, **caractérisé en ce que**
des pointes tranchantes (6a) de chaque premier disque de coupe (4a) se situent sur un premier trajet circulaire respectif,
des pointes tranchantes (4b) de chaque deuxième disque de coupe (4b) se situent sur une deuxième trajectoire circulaire respective,
la première trajectoire circulaire et la deuxième trajectoire circulaire des organes de fauchage (2a, 2b) directement adjacents se chevauchent dans la projection, une extrémité du premier organe de déblaiement (11a) respectif s'étend jusqu'à la première trajectoire circulaire respective,
une extrémité du deuxième organe de déblaiement (11b) respectif se termine à une distance radiale de la deuxième trajectoire circulaire respective.

4. Mécanisme de fauchage selon la revendication 3, **caractérisé en ce que**
la deuxième longueur du deuxième organe de déblaiement (11b) respectif est dimensionnée de telle sorte que l'extrémité du deuxième organe de déblaiement (11b) respectif se termine à une certaine distance par rapport à la première trajectoire circulaire respective d'un premier disque de coupe (4a) immédiatement adjacent respectif.

5. Mécanisme de fauchage selon la revendication 3, **caractérisé en ce que**
la deuxième longueur du deuxième organe de déblaiement (11b) respectif est dimensionnée de telle sorte que l'extrémité du deuxième organe de déblaiement (11b) respectif s'étend au-delà de la première trajectoire circulaire respective d'un premier disque de coupe (4a) immédiatement adjacent respectif.

6. Mécanisme de fauchage selon l'une des revendications 1 à 5, **caractérisé en ce que**
les premiers organes de déblaiement (11a) et les deuxièmes organes de déblaiement (11b) sont décalés les uns par rapport aux autres de préférence de 30° à 90° pour fournir un décalage de phase entre les premiers organes de déblaiement (11a) et les deuxièmes organes de déblaiement (11b).

7. Mécanisme de fauchage selon l'une des revendications 1 à 6, **caractérisé en ce que**
les premiers organes de déblaiement (11a) présentent une première épaisseur et les deuxièmes organes de déblaiement (11b) présentent une deuxième épaisseur, la deuxième épaisseur étant supérieure à la première épaisseur.

8. Mécanisme de fauchage selon l'une des revendications 1 à 7, **caractérisé en ce que**
chaque organe de fauchage (2a, 2b) comporte, en plus du disque de coupe (4a, 4b) respectif, une bride de coupe (5) sur laquelle le disque de coupe (4a, 4b) respectif prend appui,
l'organe de déblaiement (11a, 11b) respectif est fixé au moins sur la bride de coupe (5) respective.

9. Mécanisme de fauchage selon la revendication 8, **caractérisé en ce que**
l'organe de déblaiement (11a, 11b) respectif est en outre fixé en supplément sur le disque de coupe (4a, 4b) respectif.

10. Mécanisme de fauchage selon l'une des revendications 1 à 9, **caractérisé en ce que**
le premier organe de déblaiement (11a) respectif et/ou le deuxième organe de déblaiement (11b) respectif comportent, sur leur côté tourné vers la barre de transmission (8), un contour adapté à la barre de transmission (8), étagé ou courbé ou incurvé.
